# EUROPÄISCHE PATENTANMELDUNG

(11) **EP 0 837 304 A1**
(43) Veröffentlichungstag der Anmeldung: **22.04.1998**
(21) Anmeldenummer: 97117895.9
(22) Anmeldetag: 16.10.1997
(51) Int. Cl.: G01F 23/36, G01F 23/76

(54) **Vorrichtung zur Überwachung des Füllstandes eines flüssigen Mediums in einem Behälter, insbesondere Badewanne**

(30) Priorität: 17.10.1996 DE 29618028 U
(71) Anmelder: Ruhnke, Christof, 65201 Wiesbaden (DE); Ruhnke, Matthias, 65375 Oestrich-Winkel (DE); Birkholz, Wilhelm, 91058 Erlangen (DE)
(72) Erfinder: Ruhnke, Christof, 65201 Wiesbaden (DE); Ruhnke, Matthias, 65375 Oestrich-Winkel (DE); Birkholz, Wilhelm, 91058 Erlangen (DE)
(74) Vertreter: Fuchs Mehler Weiss

(57) **Zusammenfassung**

Eine Vorrichtung zur Überwachung des Füllstandes eines flüssigen Mediums in einem Behälter, insbesondere des Wasserstandes in einer Badewanne, ist als Schwimmer in Form eines langgestreckten Körpers ausgebildet, der im Wasser eine vertikale Lage einnimmt. Der Schwimmer besteht aus mindestens zwei Segmenten (2,3), die teleskopartig ineinander schiebbar sind. Die Läge des Schwimmers wird mittels eines Neigungsaufnehmers (8) ermittelt. Dieser aktiviert eine Alarmeinrichtung (4,5), wenn der Schwimmer vertikal ausgerichtet ist. Die Vorrichtung wird auf den Boden der Wanne gelegt und richtet sich beim Befüllen der Wanne langsam auf. Wenn das Wasser einen der Länge des Gehäuses entsprechenden Füllstand erreicht hat, nimmt das Gehäuse eine lotrechte Lage ein, so daß ein Alarm ausgelöst wird.

## Beschreibung

Die Erfindung betrifft eine Vorrichtung zur Überwachung des Füllstandes eines flüssigen Mediums in einem Behälter, insbesondere Badewanne, mit einem Meßfühler, der bei einem vorgegebenen Füllstand einen akustischen und/oder optischen Signalgeber einer Alarmeinrichtung aktiviert.

Ein akustischer Wasserstandsanzeiger für Badewannen zum Schutz gegen überlaufendes Wasser ist aus der DE 40 42 077 A1 bekannt. Der bekannte Wasserstandsanzeiger weist ein Gehäuse auf, das einen Auslösemechanismus und eine Alarmeinrichtung wasserdicht umschließt. Das Gehäuse wird bei Bedarf in Höhe des gewünschten Wasserstandes an der Wanneninnenwand mittels eines Saugknopfes fixiert. Die Aktivierung des Signalgebers der Alarmeinrichtung erfolgt über eine Membran an der Unterseite des Hohlkörpers, die auf Wasserdruck reagiert. Nachteilig ist, daß der an der Wanne befestigte Wasserstandsanzeiger unter Wasser gesetzt wird, wenn der Benutzer das Alarmsignal ignoriert. Sobald sich der Wasserstandsanzeiger aber unter Wasser befindet, kann der Warnton nicht mehr wahrgenommen werden. Darüber hinaus ist die Handhabung des Wasserstandsanzeigers insofern erschwert, als dieser an der Wanne befestigt werden muß. Im übrigen besteht die Gefahr, daß sich der Wasserstandsanzeiger von der Warneninnenwand löst und beim Überschreiten des vorgegebenen Füllstandes ein Alarm nicht ausgelöst wird.

Die DE 33 47 520 C2 beschreibt eine Niveausignaleinrichtung für Badewannen mit einer Wasserstrahleinrichtung. Die bekannte Signaleinrichtung weist einen als kapazitiver Näherungsschalter ausgebildeter Sensor auf, der an der Außenseite des Wannenkörpers in einer bestimmten Höhe befestigt wird. Die DE 28 32 804 C3 beschreibt eine Steuervorrichtung für die Wasserversorgung einer Badewanne mit einer Betätigungseinrichtung zum Absperren des Zulaufventils bei Erreichen eines vorgegebenen Wasserstandes. Diese Einrichtung ist fest im Rohrleitungssystem installiert.

Der Erfindung liegt die Aufgabe zugrunde, eine Vorrichtung zur Überwachung des Füllstandes, insbesondere für Badewannen, zu schaffen, die zuverlässig arbeitet und einfach zu handhaben ist.

Die Lösung der Aufgabe erfolgt mit den im Schutzanspruch 1 angegebenen Merkmalen.

Die erfindungsgemäße Vorrichtung findet insbesondere zum Schutz gegen überlaufendes Wasser in einer Badewanne Verwendung. Sie kann aber auch in vorteilhafter Weise zur Überwachung des Füllstandes von anderen flüssigen Medien, z.B. Öl, Benzin etc. in Tanks oder dgl. eingesetzt werden. Der entscheidende Vorteil liegt darin, daß die Vorrichtung nicht an der Behälterwand befestigt werden braucht, sondern einfach lose in den Behälter eingelegt werden kann.

Die erfindungsgemäße Vorrichtung ist als Schwimmer in Form eines langgestreckten Körpers ausgebildet, der im flüssigen Medium eine vertikale Lage einnimmt. Vor dem Füllen der Badewanne mit Wasser wird der Schwimmer auf den Wannenboden gelegt. Mit zunehmendem Wasserstand richtet sich der Schwimmer langsam auf, bis er vertikal ausgerichtet ist und auf dem Wasser aufschwimmt. Die Lage des Schwimmers wird von einem Neigungsaufnehmer erfaßt, der die Alarmeinrichtung dann aktiviert, wenn der Schwimmer eine bestimmte Position, z.B. seine vertikale Lage, eingenommen hat.

Um die Höhe des Füllstandes einstellen zu können, bei dem der Alarm erfolgt, besteht der Schwimmer aus mindestens zwei Segmenten, die teleskopartig ineinander schiebbar sind. Zur Einstellung des gewünschten Wasserstandes in der Wanne wird der Schwimmer lediglich auf die erforderliche Länge ausgezogen oder zusammengeschoben. Eine Fixierung an der Wanneninnenwand ist nicht erforderlich. Ist die Länge des Schwimmers einmal eingestellt, wird der Alarm immer bei dem gleichen Wasserstand ausgelöst.

Die erfindungsgemäße Vorrichtung kann nicht nur zum Schutz gegen überlaufendes Wasser verwendet werden, sondern ein Alarm kann auch dann erfolgen, wenn der Füllstand auf eine vorgegebene Höhe abgefallen oder der Behälter vollständig entleert ist, d.h. der Schwimmer eine bestimmte Winkellage eingenommen hat oder in horizontaler Ausrichtung auf dem Behälterboden liegt.

Der akustische oder optische Signalgeber der Alarmeinrichtung ist zweckmäßigerweise im Kopfteil des Schwimmers angeordnet. Wird das Alarmsignal bei Erreichen des vorgegebenen Füllstandes ignoriert, schwimmt die Vorrichtung auf, wobei der akustische oder optische Signalgeber nicht unter Wasser gerät.

In einer vorteilhaften Ausführungsform weist der Schwimmer ein Befestigungselement auf, mit dem dieser am Boden des Behälters fixiert werden kann. Dadurch wird erreicht, daß der Schwimmer sich nicht in den Bereich der Badewanne bewegt, in den das Wasser einströmt. Das Befestigungselement kann als Saugnapf ausgebildet sein, der beispielsweise über ein Gelenk oder ein Faden mit dem Gehäuse des Schwimmers verbunden ist.

In einer weiteren bevorzugten Ausführungsform ist der Neigungsaufnehmer nicht als ein Schalter ausgebildet, der nur zwei Schaltzustände einnehmen kann, sondern als Meßfühler, der ein der Neigung des Gehäuses proportionales Signal erzeugt. Die Alarmeinrichtung ist in dieser Ausführungsform derart ausgebildet, daß das von dem Signalgeber erzeugte akustische und/oder optische Signal in Abhängigkeit von dem Signal des Neigungsaufnehmers verändert wird. Dadurch ist es möglich, die Höhe des Wasserstandes akustisch und/oder optisch zu signalisieren. So ist es beispielsweise möglich, die Füllstandshöhe durch die Tonhöhe, die Dauer oder die Lautstärke eines akustischen Signals anzuzeigen.

In einer einfachen und kostengünstigen Ausführungsform der erfindungsgemäßen Vorrichtung wird die Höhe des gewünschten Wasserstandes bzw. die Wassermenge zweckmäßigerweise über eine Skala eingestellt, an der sich die Länge des Schwimmers ablesen läßt. Alternativ ist es möglich, einen die Lange des Schwimmers erfassenden Meßwertaufnehmer vorzusehen, dessen Meßwerte in einer Rechen- und Auswerteinheit ausgewertet werden. In der Rechen- und Auswerteinheit können bei Eingabe entsprechender Parameter auch die in dem Behälter befindliche Wassermenge berechnet und zur Anzeige gebracht werden.

In einer bevorzugten Ausführungsform ist in dem Schwimmer ein Thermometer integriert, so daß sich die Vorrichtung universell einsetzen läßt. Die Vorrichtung kann auch als Energie- und Wasserspargerät verwendet werden. Bei einer derartigen Ausführungsform ist die Rechen- und Auswerteinheit derart ausgebildet, daß bei Vorgabe bestimmter Parameter, z.B. die Größe des Behälters, aus den Meßwerten des die Länge des Schwimmers erfassenden Meßwertaufnehmers, des Neigungsaufnehmers und des Thermometers die für die Erwärmung der in dem Behälter befindlichen Wassermenge benötigte Heizenergie bestimmt wird. Die Berechnung dieser Größe kann z.B. in einem Mikroprozessor erfolgen.

Im folgenden wird ein Ausführungsbeispiel der Erfindung unter Bezugnahme auf die Zeichnungen näher erläutert.

Es zeigen:
- Fig. 1: eine Prinzipskizze einer ersten Auführungsform der Vorrichtung zur Überwachung des Wasserstandes in einer Badewanne,
- Fig. 2a: die auf dem Wannenboden aufliegende Vorrichtung vor dem Einfüllen des Wassers in die Badewanne,
- Fig. 2b: die sich beim Einfüllen des Wassers aufrichtende Vorrichtung,
- Fig. 2c: die bei Erreichen des vorgegebenen Wasserstandes aufgerichtete Vorrichtung,
- Fig. 2d: die bei Überschreiten des vorgegebenen Wasserstandes aufschwimmende Vorrichtung,
- Fig. 3: eine Prinzipskizze einer zweiten Ausführungsform der Vorrichtung zur Überwachung des Füllstandes in einer Badewanne und
- Fig. 4: das an einem Saugnapf befestigte Gehäuse der Vorrichtung.

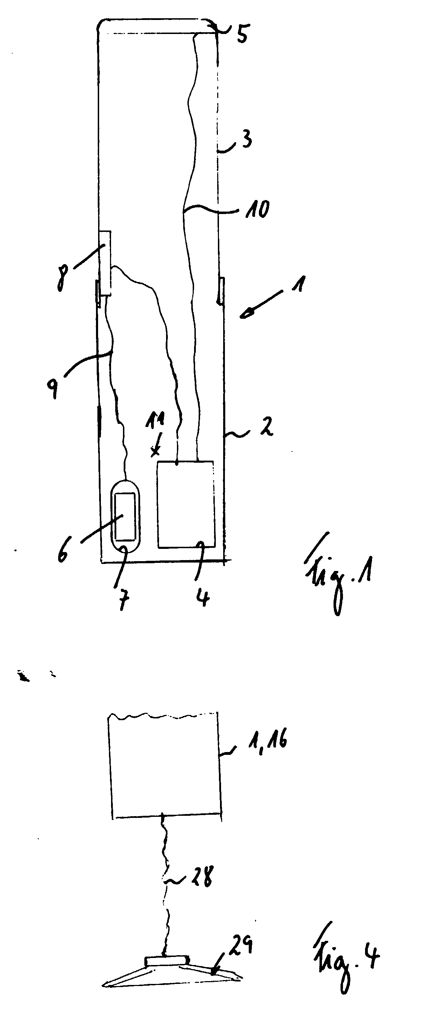

Fig. 1 zeigt eine Prinzipskizze der Vorrichtung zur Überwachung des Wasserstandes in einer Badewanne. Das Gehäuse 1 der Vorrichtung besteht aus zwei rohrförmigen Elementen 2,3, die teleskopartig ineinandergeschoben, gegeneinander abgedichtet und an ihren äußeren Enden verschlossen sind. Das Gehäuse 1 umschließt wasserdicht eine Alarmeinrichtung, die aus einer elektronischen Schaltung 4 zur Erzeugung eines Tonsignals, einen Piezolautsprecher 5 und eine Batterie 6 umfaßt, die in einem nur andeutungsweise dargestellten Batteriefach 7 eingesetzt ist. Die Batterie 6 mit dem Batteriefach 7 und die elektronische Schaltung 4 befinden sich in dem rohrförmigen Segment 2, das den Fußteil des Gehäuses 1 bildet, während der Piezolautsprecher 5 in den Gehäusedeckel integriert ist. An der Innenwand des oberen Elementes 3 ist ein Neigungsaufnehmer 8 befestigt, der als Ein/Aus-Schalter ausgebildet ist. Die Stromversorgung der elektronischen Schaltung 4 erfolgt über eine zweiadrige Leitung 9, in die der Neigungsaufnehmer 8 geschaltet ist. Der Piezolautsprecher 5 ist über eine Signalleitung 10 mit der elektronischen Schaltung 4 verbunden. Der Neigungsaufnehmer 8 ist derart in dem Gehäuse 1 angeordnet, daß die elektronische Schaltung 4 nur dann mit Strom versorgt wird, wenn diese vertikal ausgerichtet ist, so daß in der lotrechten Lage ein akustischer Alarm ausgelöst wird. In der horizontalen Lage ist die elektronische Schaltung von der Stromversorgung getrennt.

Das spezifische Gewicht der Vorrichtung ist derart bemessen, daß diese im Wasser schwimmt. Da der Schwerpunkt 11 der Vorrichtung im Fußteil des Gehäuses liegt, nimmt die Vorrichtung im Wasser eine vertikale Lage ein, wobei das spezifische Gewicht derart bemessen ist, daß nur der Gehäusedeckel mit dem Piezolautsprecher 5 oberhalb des Wasserspiegels liegt. Die Verlagerung des Schwerpunktes 11 in den Fußteil wird dadurch erreicht, daß die Komponenten der Alarmeinrichtung, die ein relativ großes Gewicht haben, insbesondere die Batterie, in der unteren Gehäusehälfte angeordnet sind. Zur Erhöhung des Auftriebs kann am Gehäusedeckel noch ein beispielsweise ringförmiger Styroporkörper befestigt sein, der in Fig. 1 nicht dargestellt ist.

Da die beiden rohrförmigen Elemente 2,3 teleskopartig ineinandergeschoben sind, kann die Länge des Gehäuses 1 verändert werden. Hierzu wird das obere Element 3 in das untere Element 2 eingeschoben bzw. aus diesem herausgezogen. Das untere Element 2 kann auch mit einem Innengewinde und das obere Element 3 mit einem Außengewinde versehen sein, so daß sich die Länge des Gehäuses durch axiales Drehen der rohrförmigen Elemente verändern läßt.

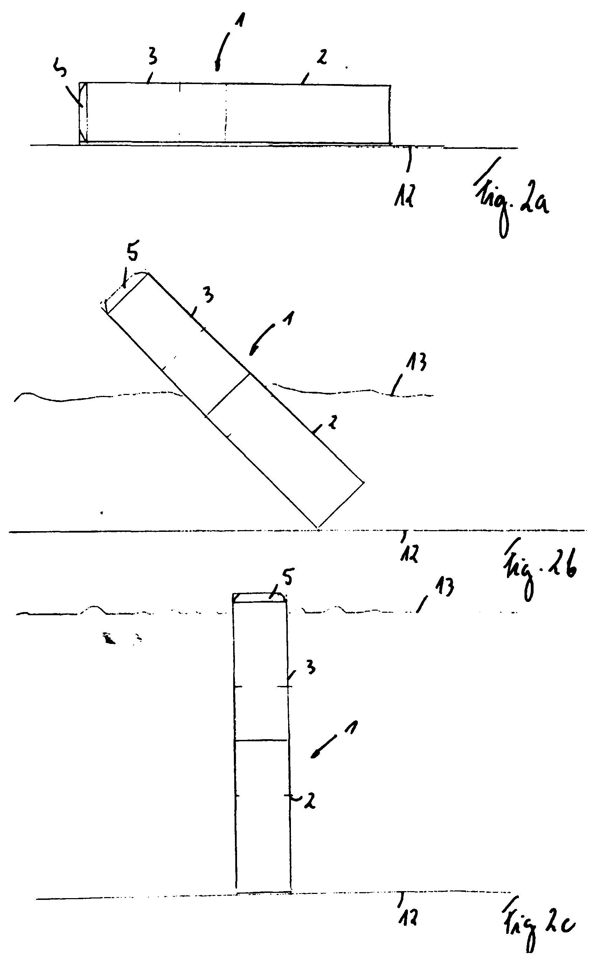

Nachfolgend wird die Funktionsweise der Vorrichtung unter Bezugnahme auf die Fign. 2a bis 2d im einzelnen beschrieben.

Zunächst wird das Gehäuse 1 der Vorrichtung auf eine dem gewünschten Wasserstand entsprechende Länge ausgezogen und die Vorrichtung wird auf den Boden 12 der Wanne gelegt (Fig. 2a). Beim Füllen der Wanne mit Wasser richtet sich die Vorrichtung langsam auf. Der Wasserspiegel ist in Fig. 2b mit dem Bezugszeichen 13 versehen. Wenn der Wasserstand die durch die Länge des Gehäuses 1 vorgegebene Höhe erreicht, nimmt die Vorrichtung eine vertikale Lage ein, so daß der Neigungsaufnehmer 8 durchschaltet und der Piezolautsprecher 5 einen akustischen Alarm gibt (Fig. 2c). Wird der Wasserlauf nicht sofort unterbrochen, so schwimmt die Vorrichtung auf, wobei der Gehäusedeckel mit dem Piezolautsprecher oberhalb des Wasserspiegels 13 liegt.

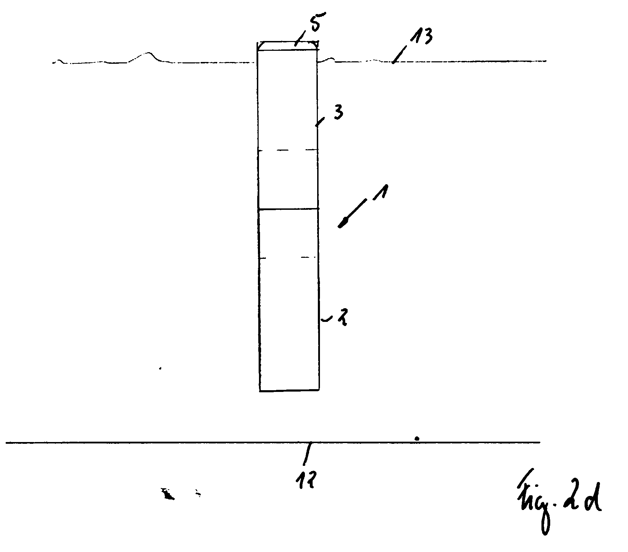

Fig. 3 zeigt eine weitere Ausführungsform der Vorrichtung. Dieses Ausführungsbeispiel unterscheidet sich zunächst von der unter Bezugnahme auf Fig. 1 beschriebenen Ausführungsform dadurch, daß das Gehäuse 14 aus drei teleskopartig ineinandergeschobenen rohrförmigen Segmenten 15,16,17 besteht. Das Gehäuse 14 weist einen Fußteil 30 aus flexiblem Kuststoff mit einem kalottenförmigen Unterteil auf. Das untere Segment 15 des Gehäuses 14 nimmt das Batteriefach 18 mit der Batterie 19, die elektronische Schaltung 20 zur Erzeugung des Tonsignals, eine Rechen- und Auswerteinheit 21 mit einem Mikroprozessor und eine Anzeigeeinheit 22 in Form eines LCD-Displays auf. In die Stromversorgungsleitung 23 ist ein wasserdichter Ein/Aus-Schalter 24 geschaltet, der an der Gehäusewand befestigt ist. Neben dem Neigungsaufnehmer 24 an der Gehäuseinnenwand weist die Vorrichtung noch einen die Länge des Gehäuses erfassenden Meßwertaufnehmer 25 auf, der in Fig. 3 nur andeutungsweise dargestellt ist. Darüber hinaus ist an der Gehäuseinnenwand ein Thermofühler 26 vorgesehen. Der Piezolautsprecher 27 ist, wie bei dem Ausführungsbeispiel gemäß Fig. 1, im Gehäusedeckel integriert. Die einzelnen Komponenten sind über flexible Verbindungsleitungen 28 elektrisch miteinander verbunden.

Bei dieser Ausführungsform ist der Neigungsaufnehmer 24 derart ausgebildet, daß dieser ein dem Neigungswinkel des Gehäuses 16 proportionales Signal erzeugt. Die Rechen- und Auswerteinheit 21 empfängt die Meßwerte des Neigungsaufnehmers 24, des die Länge des Gehäuses erfassenden Meßwertaufnehmers 25 und des Thermofühlers 26 und berechnet aus den gewonnenen Meßwerten den Energiewert, der für die Erwärmung der in der Badewanne befindlichen Wassermenge benötigt wird. Dieser Wert wird auf dem LCD-Display 22 zur Anzeige gebracht. Zusätzlich kann auf dem LCD-Display auch die Wassermenge und/oder die Temperatur abgelesen werden. Diese Meßgrößen werden vorzugsweise wechselweise angezeigt. Die für die Berechnung des Energiewertes erforderliche Parameter, wie z.B. die Größe der Wanne, können fest vorgegeben sein oder mittels einer in Fig. 3 nicht dargestellten Eingabeeinheit individuell eingestellt werden.

Bei der Ausführungsform gemäß Fig. 3 erzeugt die elektronische Schaltung 20 eine Folge von Tonsignalen, wobei in Abhängigkeit von dem Neigungswinkel des Gehäuses die Dauer der Tonsignale verändert wird. Das Erreichen des Füllstandes wird dann durch einen langanhaltenden Piepston signalisiert. Da die Vorrichtung mit dem Schalter 24 ein- bzw. ausgeschaltet wird, kann diese auch in vertikaler Position gelagert werden.

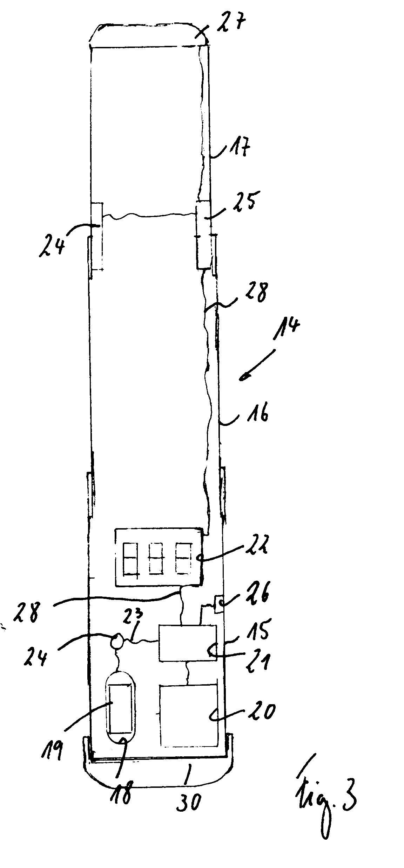

Fig. 4 zeigt ein Ausführungsbeispiel der Vorrichtung, bei der das Gehäuse 1,16 mittels eines Fadens an einem Saugnapf 29 befestigt ist. Der Saugnapf 29 ermöglicht es, die Vorrichtung am Wannenboden zu fixieren. Dadurch wird vermieden, daß die Vorrichtung sich in den Bereich der Badewanne bewegt, in den das Wasser zuläuft.

## Patentansprüche

1. Vorrichtung zur Überwachung des Füllstandes eines flüssigen Mediums in einem Behälter, insbesondere in einer Badewanne, bestehend aus einem langgestreckten, in das flüssige Medium einlegbaren Körper, bei dem ein Ende leichter und das andere Ende schwerer als das flüssige Medium ausgebildet ist, der demzufolge bei Erreichen des gewünschten Füllstandes eine senkrechte Position einnimmt und in dem eine Spannungsquelle (6), ein lageabhängiger Schalter (8) und ein akustischer und/oder optischer Signalgeber (5) angeordnet sind, dadurch gekennzeichnet, daß der langgestreckte Körper aus zwei teleskopartig ineinander schiebbaren, endseitig geschlossenen, rohrförmigen Segmenten (2, 3) besteht, die eine flüssigkeitsdichtes Gehäuse (1) bilden und mittels derer die Gesamtlänge des Gehäuses (1) einstellbar ist.

2. Vorrichtung nach Anspruch 1, dadurch gekennzeichnet, daß im leichteren Ende des Gehäuses (1) endseitig der Signalgeber (5) angeordnet ist.

3. Vorrichtung nach Anspruch 1 oder 2, dadurch gekennzeichnet, daß im schwereren Ende des Gehäuses (1) die Spannungsquelle (6) der lageabhängige Schalter (8) und gegebenenfalls weitere erforderliche Bauteile angeordnet sind.

4. Vorrichtung nach einem der Ansprüche 1 bis 3, dadurch gekennzeichnet, daß am leichteren Ende des Gehäuses (1) außen ein zusätzlicher Auftriebskörper befestigt ist.

5. Vorrichtung nach einem der Ansprüche 1 bis 4, dadurch gekennzeichnet, daß ein oder mehrere weitere teleskopartig ineinander schiebbare, endseitig offene, rohrförmige Segmente (16) vorgesehen sind.

6. Vorrichtung nach einem der Ansprüche 1 bis 5, dadurch gekennzeichnet, daß anstelle des lageabhängigen Schalter (8) eine Neigungs- Meßwertgeber (24) vorgesehen ist und daß mittels einer Schalteinrichtung (4) ein akustisches und/oder optisches Signal erzeugbar ist, das proportional zur Neigung des Gehäuses (1) veränderbar ist.

7. Vorrichtung nach einem der Ansprüche 1 bis 6, dadurch gekennzeichnet, daß außerdem ein die Länge des Gehäuses (1) erfassender Meßwertgeber (25) sowie eine Rechen- und Auswerteinheit (21) vorgesehen sind, so daß aus den ermittelten Werten für die Länge und Neigung des Gehäuses (1) die im Behälter befindliche Flüssigkeitsmenge berechenbar und auf eine Arzeigeeinheit (22) angebbar ist.

8. Vorrichtung nach einem der Ansprüche 1 bis 7, dadurch gekennzeichnet, daß in das Gehäuse (1) ein Meßwertgeber (26) für die Temperatur der Flüssigkeit integriert ist.

9. Vorrichtung nach Anspruch 8, dadurch gekennzeichnet, daß mittels der Rechen- und Auswerteinheit (21) aus den Werten für die Länge und Neigung des Gehäuses (1) sowie für die Flüssigkeitstemperatur der Wärmeinhalt der im Behälter befindlichen Flüssigkeitsmenge bestimmbar ist.

10. Vorrichtung nach Anspruch 9, dadurch gekennzeichnet, daß an der Rechen- und Auswerteinheit (21) eine Ausgangstemperatur einstellbar und daß mittels der Rechen- und Auswerteinheit (21) aus dem Wärmeinhalt der Flüssigkeitsmenge die für dessen Erwärmung erforderliche Heizenergie bestimmbar und anzeigbar ist.
